# EUROPÄISCHE PATENTANMELDUNG

(11) **EP 2 669 076 A1**
(43) Veröffentlichungstag der Anmeldung: **04.12.2013**
(21) Anmeldenummer: 12170228.6
(22) Anmeldetag: 31.05.2012
(51) Int. Cl.: B29C 70/68, B29K 77/00

(54) **Verfahren zum Verbinden zweier Kunststoffteile zur Bildung einer einzigen Komponente**

(71) Anmelder: BASF SE, 67056 Ludwigshafen (DE)
(72) Erfinder: Die Erfindernennung liegt noch nicht vor
(74) Vertreter: Rippel, Hans Christoph

(57) **Zusammenfassung**

Die Erfindung betrifft ein Verfahren zur Verbindung zweier Kunststoffelemente zu einem Bauteil, wobei ein zweites Kunststoffelement zur Verbindung an ein erstes Kunststoffelement in einem Urformprozess oder Umformprozess angeformt wird, folgende Schritte umfassend:
(a) Einlegen des ersten Kunststoffelements in ein Formwerkzeug, wobei das erste Kunststoffelement mindestens einen Thermoplast als Matrixmaterial enthält,
(b) Einbringen einer Kunststoffformmasse in das Formwerkzeug zum Formen des zweiten Kunststoffelements, wobei die Kunststoffformmasse mindestens einen Thermoplast mit reaktiven Gruppen oder eine Mischung aus mindestens einem Thermoplast und einem Material mit reaktiven Gruppen enthält, die mit reaktiven Gruppen des Thermoplasts des ersten Kunststoffelements chemisch reagieren.

## Beschreibung

Die Erfindung geht aus von einem Verfahren zur Verbindung von zwei Kunststoffelementen zu einem Bauteil, bei dem in einem ersten Schritt ein erstes Kunststoffbauteil in ein Formwerkzeug eingelegt wird und in einem zweiten Schritt eine Kunststoffformmasse zur Ausbildung des zweiten Kunststoffelementes in das Formwerkzeug eingebracht wird.

Entsprechende Verfahren werden zum Beispiel eingesetzt, wenn Kunststoffbauteile aus einem faserverstärkten Polymer durch angespritzte Rippen verstärkt werden sollen. Auch werden entsprechende Verfahren eingesetzt, um beispielsweise Grundkörper aus einem verstärkten Polymermaterial mit einer zweiten Polymermasse zu umspritzen, um auf diese Weise die Oberflächeneigenschaften zu beeinflussen.

Um eine gute Verbindung zwischen dem ersten Kunststoffelement und der Kunststoffformmasse des zweiten Kunststoffelementes zu erhalten, wird das erste Kunststoffelement üblicherweise vorgewärmt. Das Vorwärmen kann dabei vor Einlegen in das Formwerkzeug oder alternativ durch eine Zusatzheizung, beispielsweise einen Infrarotstrahler, im Formwerkzeug erfolgen. Durch das Vorwärmen wird das erste Kunststoffelement vorzugsweise erweicht und gegebenenfalls an der Oberfläche angeschmolzen. Um ein Verformen des erweichten ersten Kunststoffelements zu vermeiden wird das erste Kunststoffelement üblicherweise im Formwerkzeug erwärmt. Durch das Vorwärmen und gegebenenfalls das Anschmelzen des ersten Kunststoffelements verschweißen die Polymere des ersten Kunststoffelementes und des zweiten Kunststoffelementes, und es entsteht eine feste Verbindung.

Um eine ausreichend große Festigkeit zu erhalten, insbesondere, wenn das zweite Kunststoffelement Rippen umfasst, die das Bauteil aus dem ersten Kunststoffelement verstärken sollen, ist ein ausreichend tiefes Aufschmelzen des ersten Kunststoffformteils notwendig, damit eine stabile Schweißverbindung entsteht. Aufgrund des Erwärmens des ersten Kunststoffelements im Formwerkzeug ist eine hohe Taktzeit erforderlich, bis das Bauteil aus dem Formwerkzeug entnommen werden kann, da eine Entnahme erst möglich ist, wenn die Polymere des Kunststoffelementes und des zweiten Kunststoffelementes soweit erstarrt sind, dass das Bauteil formstabil ist. Um dies zu erreichen, wird das Formwerkzeug üblicherweise gekühlt.

Das Schweißen und Umspritzen von endlosfaserverstärkten flächigen Kunststoffteilen, sogenannten Organoblechen, ist beispielsweise beschrieben in Marco Wacker et al., "Schweißen und Umspritzen von Organoblechen", KU Kunststoffe, Carl Hanser Verlag, München, Jahrgang 92 (2002), 6. Durch Hinter- bzw. Umspritzen können Funktionselemente an das Organoblech angebracht werden. Hierzu wird das Organoblech vor dem Einlegen in das Formwerkzeug vorgeheizt und anschließend mit einem zweiten Polymer umspritzt. Dies führt jedoch aufgrund der Taktzahlen und der notwendigen hohen Formwerkzeuge zu den vorstehend beschriebenen Nachteilen.

Aufgabe der vorliegenden Erfindung ist es daher, ein Verfahren zur Verbindung zweier Kunststoffelemente bereitzustellen, das eine stabile Verbindung der Kunststoffelemente bereitstellt und geringere Taktzeiten bei der Herstellung ermöglicht.

Gelöst wird die Aufgabe durch ein Verfahren zur Verbindung zweier Kunststoffelemente zu einem Bauteil, wobei ein zweites Kunststoffelement zur Verbindung an ein erstes Kunststoffelement in einem Urformprozess oder Umformprozess angeformt wird, folgende Schritte umfassend:
(a) Einlegen des ersten Kunststoffelements in ein Formwerkzeug, wobei das erste Kunststoffelement mindestens einen Thermoplast als Matrixmaterial enthält,
(b) Einbringen einer Kunststoffformmasse in das Formwerkzeug zum Formen des zweiten Kunststoffelements, wobei die Kunststoffformmasse mindestens einen Thermoplast mit reaktiven Gruppen oder eine Mischung aus mindestens einem Thermoplast und einem Material mit reaktiven Gruppen enthält, die mit reaktiven Gruppen des Thermoplasts des ersten Kunststoffelements chemisch reagieren.

Im Rahmen der vorliegenden Erfindung wird unter "Anformen" sowohl das partielle Anformen von Kunststoffelementen an Teilen des ersten Kunststoffelements verstanden als auch das vollständige oder teilweise Umschließen des ersten Kunststoffelements.

Als Urformprozesse werden zum Beispiel Spritzgießen oder Fließpressen verstanden und Umformprozesse sind beispielsweise Thermoformen oder Formpressen.

Durch die chemische Reaktion der reaktiven Gruppen, die in der Kunststoffformmasse für das zweite Kunststoffelement enthalten sind, mit reaktiven Gruppen des Thermoplasts des Matrixmaterials des ersten Kunststoffelements, beispielsweise mit Aminogruppen eines als Matrixmaterial verwendeten Polyamids, wird eine stabile Verbindung zwischen dem ersten Kunststoffelement und dem zweiten Kunststoffelement erzielt. Ein weiterer Vorteil ist, dass das erste Kunststoffelement weniger stark angeschmolzen werden muss als beim Verschweißen von zwei Kunststoffelementen. Hierdurch ist es möglich, das Verfahren bei einer niedrigeren Verarbeitungstemperatur des ersten Kunststoffelements durchzuführen. So ist es zum Beispiel möglich, eine niedrigere Temperatur für das Formwerkzeug zu wählen. Alternativ ist es auch möglich, das erste Kunststoffelement weniger stark aufzuheizen, bevor es in das Formwerkzeug eingelegt wird. Dies bedingt weiterhin, dass auch die Taktzeiten reduziert werden können.

In einer bevorzugten Ausführungsform ist das erste Kunststoffelement ein faserverstärktes flächiges Kunststoffteil. Die Fasern zur Verstärkung des faserverstärkten flächigen Kunststoffteils können Kurzfasern, Langfasern oder Endlosfasern sein. Bevorzugt ist es, wenn die Fasern zur Verstärkung des ersten Kunststoffelements Endlosfasern sind.

Wenn als Fasern zur Verstärkung des ersten Kunststoffelements Endlosfasern eingesetzt werden, so können diese in Form eines Gestrickes, eines Gewebes oder in unidirektionalen oder bidirektionalen Lagen parallel zueinander ausgerichtet sein. Auch eine Anordnung der Fasern in Form eines Vlieses oder Filzes ist möglich. Bevorzugt ist es jedoch, die Fasern zur Verstärkung als textiles Flächengebilde einzusetzen. Hierbei ist es möglich, die Fasern jeweils einzeln zu verweben oder einzelne Faserbündel miteinander zu verweben. Geeignete Fasern, die zur Verstärkung eingesetzt werden können, sind zum Beispiel organische Fasern, anorganische Fasern der mineralische Fasern sowie beliebige Kombinationen daraus. Geeignete Fasern sind zum Beispiel Kunststofffasern, Kohlenstofffasern, Glasfasern, Aramidfasern, Borfasern, Kaliumtitanatfasern, mineralische Fasern, beispielsweise Basaltfasern, und metallische Fasern, beispielsweise Stahlfasern oder Kupferfasern, sowie beliebige Kombinationen daraus.

Zur Herstellung des faserverstärkten ersten Kunststoffteils werden die Fasern, sofern diese als Gewebe, Gestrick oder Gewirk vorliegen, mit einem Thermoplasten als Matrixmaterial imprägniert. Zur Herstellung wird der Thermoplast zum Beispiel in Form einer Schmelze mit den Fasern imprägniert oder vergossen. Alternativ ist es auch möglich, die Fasern mit Monomeren zur Herstellung des Thermoplasten zu imprägnieren und anschließend zum Beispiel durch Erwärmen eine Reaktion herbeizuführen, die zur Polymerisation der Monomere führt. Weitere Möglichkeiten zur Herstellung des flächigen ersten Kunststoffelements ist eine Pulverimprägnierung oder das Laminieren der Fasern mit Polymerfolien und anschließendes Schmelzen und Verpressen der Polymerfolien, um das erste Kunststoffteil herzustellen.

Ein solches flächiges, flaches Kunststoffteil wird im Allgemeinen auch als Organoblech bezeichnet.

Geeignete Thermoplaste als Matrixmaterial für das erste Kunststoffelement und als Kunststoffformmasse für das zweite Kunststoffelement sind zum Beispiel Polyolefine, beispielsweise Polyethylen oder Polypropylen, Polyvinylpolymere wie Polyvinylchlorid (PVC), Polyvinylacetale, Polyvinylether, Polyvinyllactame oder Polyvinylamine, Styrolpolymere, beispielsweise Polystyrol, Styrol-Acrylnitril-Copolymere, AcrylnitrilButadien-Styrol, Polymere der (Meth-)Acrylsäure, beispielsweise Polyacrylsäure, Poly(meth-)acyrlsäureester, Polyacrylate, Polymethylmethacrylat, Polyacrylamid, Polycarbonate, Polyoxymethylen, Polyphenylenether, Polytetrafluorethylen, Polyphenylensulfid, Polyethersulfone, Polyetherketone, Polyimide, Polychinoxaline, Polychinoline, Polybenzimidazole, Polyamide, Polyester oder Polyurethane wie Polyisocyanate, Polyole, Polyetherpolyole, Polyesterpolyole. Besonders bevorzugt sind Polyamide, davon insbesondere Polyamid 6, Polyamid 6.6, Polyamid 4.6, Polyamid 6.10, Polyamid 6T und Polyamid 6/6.6.

Zur Einstellung der Eigenschaften des ersten Kunststoffelements kann der als Matrixmaterial eingesetzte Thermoplast zusätzlich Additive enthalten. Dies sind zum Beispiel UV-Stabilisatoren, Schmiermittel, Nukleierungsmittel, Farbstoffe, Weichmacher oder beliebige andere, dem Fachmann bekannte Additive, die zur Einstellung der Eigenschaften eines Thermoplasts eingesetzt werden.

In einer bevorzugten Ausführungsform enthält der als Matrixmaterial eingesetzte Thermoplast 0 bis 2 Gew.-% UV-Stabilisatoren, 0 bis 1 Gew.-% Schmiermittel und 0 bis 1 Gew.-% Nukleierungsmittel.

Besonders bevorzugt ist es, wenn als Thermoplast für das erste Kunststoffteil ein Polyamid eingesetzt wird, das eine Anzahl an Amino-Endgruppen von mehr als 20 mmol/kg aufweist. Mehr bevorzugt ist es, wenn die Zahl der primären Amino-Endgruppen größer als 25 mmol/kg ist. Die Anzahl der primären Amino-Endgruppen kann bei der Herstellung durch ein passendes Verhältnis von in den Monomeren vorliegenden Amino- zu Carbonsäure-Endgruppen eingestellt werden. Durch diese spezielle Anzahl an primären Amino-Endgruppen wird die Wärme- und/oder Hydrolysestabilität des ersten Kunststoffteils erhöht.

Die Bestimmung der Amino-Endgruppen kann mittels einer Titration einer Lösung des Polyamids in Gegenwart eines Indikators durchgeführt werden. Hierzu wird das Polyamid in einem Gemisch aus Phenol und Methanol (zum Beispiel 75 Gew.-% Phenol und 25 Gew.-% Methanol) unter Erwärmen gelöst. Die Mischung kann beispielsweise unter Rückfluss am Siedepunkt gehalten werden, bis das Polymer gelöst ist. Die abgekühlte Lösung wird mit einem geeigneten Indikator bzw. einer Indikatormischung, zum Beispiel methanolische Lösung aus Benzylorange und Methylenblau, versetzt und mit einer methanolhaltigen Perchlorsäurelösung in Glykol bis zum Farbumschlag titriert. Aus dem Perchlorsäureverbrauch wird die Amino-Endgruppenkonzentration berechnet.

Weitere geeignete Verfahren zur Bestimmung der primären Amino-Endgruppen sind beispielsweise in WO 2008/022910 beschrieben.

Zur Herstellung des Bauteils wird das erste Kunststoffelement in ein Formwerkzeug eingelegt. Hierbei ist es zum Beispiel möglich, das erste Kunststoffelement, insbesondere wenn es sich hierbei um ein flächiges Kunststoffelement handelt, in einem ersten Werkzeug vorzuformen und den so hergestellten Vorformling in das Formwerkzeug einzulegen. Alternativ ist es auch möglich, das flächige Kunststoffelement in das Formwerkzeug einzulegen und direkt im Formwerkzeug umzuformen. Bevorzugt ist es jedoch, das erste Kunststoffelement vorzuformen und den Vorformling in das Formwerkzeug einzulegen. Weiterhin ist es möglich, das erste Kunststoffelement vor dem Einlegen in das Formwerkzeug zu erwärmen oder alternativ das erste Kunststoffelement im Formwerkzeug zu erwärmen. Hierbei kann die Temperatur niedriger gewählt werden als dies notwendig wäre, wenn das erste Kunststoffelement mit der Kunststoffformmasse des zweiten Kunststoffelements durch Aufschmelzen miteinander verschweißt wird. Insbesondere ist es bevorzugt, das erste Kunststoffelement vorzuwärmen und das vorgewärmte erste Kunststoffelement in das Formwerkzeug einzulegen.

Bevorzugt ist es, wenn das Formwerkzeug eine Temperatur im Bereich von 40 bis 210 °C, insbesondere im Bereich von 80 bis 120 °C aufweist. Das erste Kunststoffelement wird vorzugsweise vor dem Einlegen in das Formwerkzeug auf eine Temperatur im Bereich von 30 bis 190 °C, insbesondere im Bereich von 120 bis 170 °C erwärmt.

Nach dem Einlegen des ersten Kunststoffelements wird die Kunststoffformmasse in das Formwerkzeug zum Formen des zweiten Kunststoffelements eingebracht. Hierbei ist es möglich, die Kunststoffformmasse entweder lokal an vorgegebenen Positionen an das erste Kunststoffelement anzuformen oder alternativ das erste Kunststoffelement vollständig oder teilweise mit Kunststoffmasse zu umschließen. Bei einem vollständigen oder teilweisen Umschließen des ersten Kunststoffelements ist es weiterhin möglich, zusätzlich Funktionselemente aus der zweiten Formmasse auszubilden. Geeignete Funktionselemente sind zum Beispiel Verstärkungselemente wie Rippen.

Durch das Ausbilden der Funktionselemente, beispielsweise Rippen, kann das erste Kunststoffelement zusätzlich verstärkt werden. Hierdurch wird zum Beispiel eine höhere Festigkeit und Steifigkeit für das so hergestellte Bauteil erzielt.

Neben einer Verbesserung der Eigenschaften, zum Beispiel einer Erhöhung der Festigkeit durch zusätzliche Rippen, kann durch das erfindungsgemäße Verfahren auch eine Änderung der Oberflächeneigenschaften, zum Beispiel durch Überströmen des ersten Kunststoffelements mit einer dünnen Schicht aus der Kunststoffformmasse für das zweite Kunststoffelement, erhalten werden. So lässt sich zum Beispiel eine optisch bessere Oberfläche erzeugen.

Die Kunststoffformmasse für das zweite Kunststoffelement enthält erfindungsgemäß mindestens einen Thermoplast mit reaktiven Gruppen oder eine Mischung aus mindestens einem Thermoplast und einem Material mit reaktiven Gruppen, die mit reaktiven Gruppen des Thermoplasts des ersten Kunststoffelements chemisch reagieren.

Besonders bevorzugt wird als Thermoplast für die Kunststoffformmasse für das zweite Kunststoffelement ein Polyamid verwendet.

Der Thermoplast, der in der Mischung für die Kunststoffformmasse für das zweite Kunststoffelement enthalten ist, kann der gleiche sein wie der Thermoplast, der das Matrixmaterial des ersten Kunststoffelements bildet. Alternativ ist es jedoch auch möglich, unterschiedliche Thermoplaste einzusetzen. Auch Mischungen aus unterschiedlichen Thermoplasten können für die Kunststoffformmasse eingesetzt werden.

Wenn ein Polyamid als Thermoplast für das Matrixmaterial für das erste Kunststoffelement verwendet wird, ist es vorteilhaft, als Thermoplast für die Kunststoffformasse für das zweite Kunststoffelement ebenfalls ein Polyamid zu verwenden. Hierbei ist das Polyamid für das Matrixmaterial vorzugsweise das gleiche, wie das Polyamid für die Kunststoffformmasse für das zweite Kunststoffelement. Alternativ können jedoch auch unterschiedliche Polyamide oder Polyamidmischungen eingesetzt werden. So ist es insbesondere zur Herstellung von optisch besseren Oberflächen bevorzugt, wenn die Kunststoffformmasse zumindest in Anteilen ein Polyamid enthält, das eine geringe Kristallinität aufweist. Hierdurch wird eine glattere Oberfläche erzielt. Ein geeignetes Polyamid mit geringerer Kristallinität ist zum Beispiel PA 6/6.6. Dieses kann allein oder in beliebiger Mischung mit einem anderen Polyamid in der Kunststoffformmasse für das zweite Kunststoffelement enthalten sein.

Zur Einstellung der Eigenschaften der Kunststoffformmasse für das zweite Kunststoffelement kann diese weitere Additive enthalten. Entsprechende Additive sind zum Beispiel Schlagzähmodifizierer, Schmiermittel, Wärmestabilisatoren, UV-Stabilisatoren, Füllstoffe und Fasern zur Verstärkung.

Als Schlagzähmodifizierer werden zum Beispiel esterfunktionalisierte Olefine eingesetzt. Der Anteil an Schlagzähmodifizierern liegt vorzugsweise im Bereich von 0 bis 10 Gew.-%.

Als Schmierstoffe, Wärmestabilisatoren, UV-Stabilisatoren können beliebige, dem Fachmann bekannte Substanzen eingesetzt werden. Vorzugsweise enthält die Kunststoffformmasse zur Herstellung des zweiten Kunststoffelements 0 bis 1 Gew.-% eines Schmiermittels, 0 bis 4 Gew.-% Wärmestabilisatoren und 0 bis 2 Gew.-% UV-Stabilisatoren.

Zusätzlich kann die Kunststoffformmasse für das zweite Kunststoffelement auch Verstärkungsmittel enthalten. Als Verstärkungsmittel eignen sich zum Beispiel Fasern, vorzugsweise Kurzfasern oder Langfasern. Der Anteil an Fasern in der Kunststoffformmasse für das zweite Kunststoffelement liegt vorzugsweise im Bereich von 10 bis 50 Gew.-%, bezogen auf die Gesamtmasse der Kunststoffformmasse.

Als Fasern können organische, anorganische oder mineralische Fasern sowie beliebige Kombinationen daraus eingesetzt werden. Geeignete Fasern sind zum Beispiel Glasfasern, Kohlenstofffasern, Kunststofffasern, Aramidfasern, Kaliumtitanatfasern, mineralische Faser, beispielsweise Basaltfasern, metallische Fasern, beispielsweise Stahlfasern oder Kupferfasern, und Borfasern. Besonders bevorzugt ist der Einsatz von Kohlenstofffasern und Glasfasern. Ganz besonders bevorzugt ist der Einsatz von Kurzglasfasern.

Wenn als Matrixmaterial für das erste Kunststoffelement ein Polyamid eingesetzt wird, ist das in der Kunststoffformmasse für das zweite Kunststoffelement enthaltene Material mit reaktiven Gruppen vorzugsweise ausgewählt aus Maleinsäureanhydriden, Epoxiden, Estern, Isocyanaten, Oxazolinen, Oxazinonen, einer Mischung mindestens zweier dieser Komponenten oder einem Polymer oder Oligomer, das aus einer oder mehrerer dieser Komponenten aufgebaut ist. Die reaktiven Gruppen dieser Materialien reagieren mit den primären Amino-Endgruppen des Polyamids des ersten Kunststoffelements beim Einbringen in das Formwerkzeug.

Zusätzlich kann auch eine Reaktion mit weiteren Aminogruppen oder Carbonsäuregruppen des Polyamids erfolgen. Bevorzugt ist jedoch der Einsatz eines Polyamids mit primären Amino-Endgruppen, die mit den reaktiven Gruppen des Materials mit den reaktiven Gruppen reagieren.

Der Anteil an Material mit reaktiven Gruppen in der Kunststoffformmasse zur Herstellung des zweiten Kunststoffelements liegt vorzugsweise im Bereich zwischen 0 und 5 Gew.-%.

Wenn als Material mit reaktiven Gruppen ein Maleinsäureanhydrid eingesetzt wird, so sind insbesondere monomeres Maleinsäureanhydrid oder Styrol-Maleinsäureanhydrid-Copolymere bevorzugt. Geeignete Styrol-Maleinsäureanhydrid-Copolymere weisen ein Molekulargewicht im Bereich von 1000 bis 200.000 g/mol auf. Das Copolymer enthält vorzugsweise 5 bis 50 mol-% Maleinsäureanhydrid. Während der Herstellung der Kunststoffformmasse mit Styrol-Maleinsäureanhydrid-Copolymer als Material mit reaktiven Gruppen reagieren im Allgemeinen zwischen 5 und 50 % der Maleinsäureanhydrid-Gruppen mit den verfügbaren Amino-Endgruppen des Polyamids der Kunststoffformmasse zur Ausbildung des zweiten Kunststoffformteils.

Wenn ein Epoxid eingesetzt wird, so sind insbesondere Styrol-Glycidyl(meth)acrylatCopolymere bevorzugt. Diese weisen vorzugsweise ein Molekulargewicht im Bereich von 1000 bis 200.000 g/mol auf. Das Styrol-Glydidyl(meth)acrylat-Copolymer enthält vorzugsweise zwischen 2 und 50 mol-% Glycidyl(meth)acrylat. Wie beim Styrol-Maleinsäureanhydrid-Copolymer reagieren auch beim Styrol-Glycidyl(meth)acrylat-Copolymer während der Herstellung der Kunststoffformmasse für das zweite Kunststoffelement die reaktiven Gruppen. So reagieren im Allgemeinen zwischen 5 und 50 % der Epoxidgruppen mit den verfügbaren Amino-Endgruppen des Polyamids der Kunststoffformmasse für die Herstellung des zweiten Kunststoffelements. Neben dem Einsatz von Styrol-Glycidyl(meth)acrylat-Copolymeren eignen sich als Epoxide auch Epoxide auf dendrimeren oder sternförmigen Polymerstrukturen.

Wenn als Material mit reaktiven Gruppen Isocyanate eingesetzt werden, so sind insbesondere Isocyanate oder Diisocyanate mit geringem Molekulargewicht, oligomere Isocyanate oder Diisocyanate oder Polymere oder Dendrimere mit Isocyanaten als Seitengruppen bevorzugt. Die Isocyanatgruppen können mit Oximen blockiert sein. Während der Herstellung der Kunststoffformmasse für das zweite Kunststoffelement können zwischen 5 und 50 % der Isocyanatgruppen mit den verfügbaren Aminogruppen oder Carboxylgruppen der Polyamide der Kunststoffformmasse zur Herstellung des zweiten Kunststoffelements reagieren.

Bei Einsatz von Oxazolinen oder Oxazinonen als Material mit reaktiven Gruppen sind insbesondere Moleküle bevorzugt, die Oxazolin- oder Oxazinon-Gruppen oder beide enthalten, die mit den Aminogruppen und/oder Carboxylgruppen reagieren. Die reaktiven Gruppen können alternativ auch Seitengruppen von Polymerstrukturen sein. Während der Herstellung der Kunststoffformmasse für das zweite Kunststoffelement reagieren zwischen 5 und 50 % der Oxazolingruppen bzw. Oxazinongruppen mit den verfügbaren Amino-Endgruppen oder Carboxyl-Endgruppen der Polyamide zur Herstellung der Kunststoffformmasse für das zweiten Kunststoffelement.

Die Herstellung der Kunststoffformmasse für das zweite Kunststoffelement erfolgt vorzugsweise in einem Zweischnecken-Extruder. Hierzu werden Thermoplast, beispielsweise Polyamid, und Additive in einer Einzugszone des Zweischnecken-Extruders zugeführt. Die Einzugszone wird dabei vorzugsweise gekühlt. An die Einzugszone schließt sich im Allgemeinen eine erste Aufschmelzzone an. In einer mittleren Zone können dann gegebenenfalls Fasern zur Verstärkung des Kunststoffs zugegeben werden. Das Material mit den reaktiven Gruppen wird in einer abschließenden Zone des Extruders zugegeben, bevor die Kunststoffformmasse durch ein Werkzeug gepresst und beispielsweise granuliert wird.

Zur Herstellung des Bauteils wird dann der so hergestellte Thermoplast für das zweite Kunststoffelement einer Spritzgießmaschine zugeführt, in dieser aufgeschmolzen und in das Formwerkzeug, in dem das erste Kunststoffelement positioniert ist, eingespritzt.

Optional kann der Thermoplast auch in einem Ein- oder Zweischneckenextruder aufgeschmolzen, als Extrudat kontinuierlich ausgetragen, portioniert und in einem Formwerkzeug, in dem das erste Kunststoffelement positioniert ist, im Fließpressprozess zum Bauteil verpresst werden.

Der Thermoplast, der zur Herstellung der Kunststoffformmasse für das zweite Kunststoffelement eingesetzt wird, ist vorzugsweise der gleiche wie zur Herstellung des ersten Kunststoffelements. Bevorzugt ist der Thermoplast zur Herstellung der Kunststoffformmasse für das zweite Kunststoffelement ein Polyamid und insbesondere ausgewählt aus PA 6, PA 6.6, PA 4.6, PA 6.10, PA 6T und PA 6/6.6 oder Mischungen daraus. Wie vorstehend bereits erwähnt ist es insbesondere bevorzugt, für das erste Kunststoffelement und das zweite Kunststoffelement das gleiche Polyamid einzusetzen. Weiterhin ist insbesondere zur Herstellung von optisch glatten Oberflächen bevorzugt, der Kunststoffformmasse für das zweite Kunststoffelement zusätzlich PA 6/6.6 zuzugeben.

Das zweite Kunststoffelement, das mit dem ersten Kunststoffelements verbunden wird, umfasst zum Beispiel Rippen zur Verstärkung des ersten Kunststoffelements. Weiterhin kann das zweite Kunststoffelement auch eine Ummantelung zur Einstellung der Oberfläche des ersten Kunststoffelements sein. Neben Rippen kann das zweite Kunststoffelement auch beliebige andere Funktionselemente umfassen, die einstückig mit dem ersten Kunststoffelement verbunden werden sollen.

Damit eine gute Verbindung des ersten Kunststoffelements mit dem zweiten Kunststoffelement erfolgt, ist es weiterhin vorteilhaft, wenn die Temperatur an der Oberfläche des ersten Kunststoffelements oberhalb der Schmelztemperatur des als Matrixmaterial eingesetzten Thermoplasts liegt. Hierzu ist es zum Beispiel möglich, wie vorstehend bereits beschrieben, das erste Kunststoffelement aufzuwärmen, bevor dieses in das Formwerkzeug eingelegt wird. Alternativ kann das erste Kunststoffelement auch im Formwerkzeug aufgewärmt werden.

Der Druck, mit dem die Kunststoffformmasse für das zweite Kunststoffelement in das Formwerkzeug eingebracht wird, ist abhängig von der Fließrichtung der Schmelze. Hier werden dem Fachmann bekannte und für die Verfahren Spritzgießen sowie Fließpressen übliche Drücke eingesetzt.

### Beispiele

### Vergleichsbeispiel 1

An ein Organoblech als erstes Kunststoffelement mit einem Polyamid 6 mit 37 mmol/kg primären Amino-Endgruppen als Matrixmaterial wird durch ein Spritzgussverfahren eine Rippe aus PA 6 als zweites Kunststoffelement angebracht. Die Werkzeugtemperatur zum Anbringen der Rippe lag bei 200°C. Das Organoblech wurde vor Einlegen in das Werkzeug auf eine Temperatur von 160°C aufgewärmt.

Nach dem Anspritzen der Rippe und dem Erstarren des Polyamids wurde das so hergestellte Bauteil aus dem Formwerkzeug entnommen und einer Festigkeitsprüfung unterzogen. Hierzu wurde eine Zugkraft auf die Rippe ausgeübt und gemessen, bei welcher Kraft sich die Rippe vom Organoblech löst.

Bei der im Vergleichsbeispiel 1 hergestellten Rippe aus PA 6 lag die Kraft, bei der sich die Rippe vom Organoblech gelöst hat, bei 2250 N.

### Vergleichsbeispiel 2

Als erstes Kunststoffelement wurde ein Organoblech mit Polyamid 6 mit 83 mmol/kg primären Amino-Endgruppen als Matrixmaterial eingesetzt. An das Organoblech wurde eine Rippe aus PA 6 angespritzt. Die Herstellungsbedingungen entsprachen denen des Vergleichsbeispiels 1. Die Zugkraft, bei der sich die Rippe vom Organoblech gelöst hat, lag bei 2500 N.

### Beispiel 1

Als erste Kunststoffkomponente wurde das gleiche Organoblech verwendet wie im Vergleichsbeispiel 1. Die Kunststoffformmasse, aus der die Rippe an das Organoblech angespritzt wurde, enthielt PA 6 und 1 Gew.-% Styrol-Maleinsäureanhydrid-Copolymer. Die Bedingungen, unter denen die Rippe angespritzt wurde, entsprachen denen des Vergleichsbeispiels 1. Die Zugkraft, bei der sich die Rippe vom Organoblech gelöst hat, lag bei 3000 N.

### Beispiel 2

Es wurde als erste Kunststoffkomponente ein Organoblech wie im Vergleichsbeispiel 2 eingesetzt. Als Kunststoffformmasse für das zweite Kunststoffelement, nämlich die Rippe, wurde PA 6 mit 1 Gew.-% Styrol-Maleinsäureanhydrid-Copolymer verwendet. Die Bedingungen, unter denen die Rippe angespritzt wurde, entsprachen denen des Vergleichsbeispiels 1. Die Zugkraft, bei der sich die Rippe vom Organoblech gelöst hat, lag bei 3500 N.

### Beispiel 3

Auf ein Organoblech der gleichen Spezifikation wie im Vergleichsbeispiel 2 wurde als zweites Kunststoffelement eine Rippe aus PA 6 mit 1 Gew.-% Styrol-Glycidyl(meth)acrylat-Copolymer unter den gleichen Bedingungen wie in Vergleichsbeispiel 1 angespritzt. Die Zugkraft, bei der sich die Rippe vom Organoblech gelöst hat, lag bei 3200 N.

## Patentansprüche

1. Verfahren zur Verbindung zweier Kunststoffelemente zu einem Bauteil, wobei ein zweites Kunststoffelement zur Verbindung an ein erstes Kunststoffelement in einem Urformprozess oder Umformprozess angeformt wird, folgende Schritte umfassend:
(a) Einlegen des ersten Kunststoffelements in ein Formwerkzeug, wobei das erste Kunststoffelement mindestens einen Thermoplast als Matrixmaterial enthält,
(b) Einbringen einer Kunststoffformmasse in das Formwerkzeug zum Formen des zweiten Kunststoffelements, wobei die Kunststoffformmasse mindestens einen Thermoplast mit reaktiven Gruppen oder eine Mischung aus mindestens einem Thermoplast und einem Material mit reaktiven Gruppen enthält, die mit reaktiven Gruppen des Thermoplasts des ersten Kunststoffelements chemisch reagieren.

2. Verfahren gemäß Anspruch 1, **dadurch gekennzeichnet, dass** das erste Kunststoffelement ein faserverstärktes flächiges oder linienförmiges Kunststoffteil ist.

3. Verfahren gemäß Anspruch 2, **dadurch gekennzeichnet, dass** die Fasern zur Verstärkung des ersten Kunststoffelements Endlosfasern sind.

4. Verfahren gemäß Anspruch 2 oder 3, **dadurch gekennzeichnet, dass** die Fasern in Form eines Gewebes oder eines Geleges oder in Form undirektionaler Faserstrukturen im ersten Kunststoffelement enthalten sind.

5. Verfahren gemäß einem der Ansprüche 2 bis 4, **dadurch gekennzeichnet, dass** die Fasern ausgewählt sind aus Kunststofffasern, Kohlenstofffasern, Glasfasern, Aramidfasern, Borfasern, Kaliumtitanatfasern, mineralischen Fasern und metallischen Fasern sowie beliebigen Kombinationen daraus.

6. Verfahren gemäß einem der Ansprüche 1 bis 5, **dadurch gekennzeichnet, dass** der Thermoplast des ersten Kunststoffelements ein Polyamid ist.

7. Verfahren gemäß Anspruch 6, **dadurch gekennzeichnet, dass** das Polyamid ausgewählt ist aus PA 6, PA 6.6, PA 4.6, PA 6.10, PA 6T und PA 6/6.6.

8. Verfahren gemäß einem der Ansprüche 1 bis 7, **dadurch gekennzeichnet, dass** das Material mit den reaktiven Gruppen der Kunststoffformmasse für das zweite Kunststoffelement ausgewählt ist aus Maleinsäureanhydriden, Epoxiden, Estern, Isocyanaten, Oxazolinen, Oxazinonen, einer Mischung mindestens zweier dieser Komponenten oder einem Polymer oder Oligomer aufgebaut aus einer oder mehrerer dieser Komponenten.

9. Verfahren gemäß einem der Ansprüche 1 bis 8, **dadurch gekennzeichnet, dass** das Material mit den reaktiven Gruppen ausgewählt ist aus monomerem Maleinsäureanhydrid, Styrol-Maleinsäureanhydrid-Copolymeren, Styrol-Glycidyl(meth)acrylat-Copolymeren, Isocyanaten oder Diisocyanaten mit geringem Molekulargewicht, oligomeren Isocyanaten oder Diisocyanaten, Polymeren oder Dendrimeren mit Isocyanaten als Seitengruppe oder Molekülen, die Oxazolin- oder Oxazinon-Gruppen enthalten.

10. Verfahren gemäß einem der Ansprüche 1 bis 9, **dadurch gekennzeichnet, dass** der Thermoplast der Kunststoffformmasse für das zweite Kunststoffelement ein Polyamid ist.

11. Verfahren gemäß Anspruch 10, **dadurch gekennzeichnet, dass** das Polyamid der Kunststoffformmasse für das zweite Kunststoffelement ausgewählt ist aus PA 6, PA 6.6, PA 4.6, PA 6.10, PA 6T und PA 6/6.6.

12. Verfahren gemäß einem der Ansprüche 1 bis 11, **dadurch gekennzeichnet, dass** die Kunststoffformmasse für das zweite Kunststoffelement Fasern, Füllstoffe und/oder weitere Additive enthält.

13. Verfahren gemäß einem der Ansprüche 1 bis 12, **dadurch gekennzeichnet, dass** das zweite Kunststoffelement Rippen zur Verstärkung des ersten Kunststoffelements umfasst.

14. Verfahren gemäß einem der Ansprüche 1 bis 13, **dadurch gekennzeichnet, dass** das erste Kunststoffelement vollständig von der Kunststoffformmasse für das zweite Kunststoffelement umschlossen wird.
